# EUROPÄISCHE PATENTSCHRIFT

(11) **EP 1 092 290 B1**
(45) Veröffentlichungstag und Bekanntmachung des Hinweises auf die Patenterteilung: **06.10.2004**
(21) Anmeldenummer: 99939925.6
(22) Anmeldetag: 22.06.1999
(51) Int. Cl.: H04B 7/26, H04J 3/16, H04J 13/00

(54) **VERFAHREN ZUR DIGITALEN FUNK-ÜBERTRAGUNG VON DATEN MEHRERER TEILNEHMER**
METHOD FOR DIGITAL RADIO TRANSMISSION OF DATA FROM SEVERAL SUBSCRIBERS
PROCEDE POUR LA TRANSMISSION RADIO NUMERIQUE DE DONNEES DE PLUSIEURS ABONNES

(30) Priorität: 22.06.1998 DE 19827701
(43) Veröffentlichungstag der Anmeldung: 18.04.2001
(73) Patentinhaber: SIEMENS AKTIENGESELLSCHAFT, 80333 München (DE)
(72) Erfinder: KREUL, Theo, D-45525 Hattingen (DE); LANDENBERGER, Holger, D-46397 Bocholt (DE); REINHARDT, Markus, D-89275 Elchingen (DE); JARBOT, Lutz, D-46395 Bocholt (DE)
(86) Internationale Anmeldenummer: PCT/DE1999/001814
(87) Internationale Veröffentlichungsnummer: WO 1999/067921

(56) Entgegenhaltungen:
- EP-A- 0 537 588
- WO-A-95/03652
- US-A- 5 193 091
- US-A- 5 659 569
- NOVOSAD T: "A NEW FAMILY OF QUADRIPHASE SEQUENCES FOR CDMA" 1. Mai 1993 (1993-05-01) , IEEE TRANSACTIONS ON INFORMATION THEORY,US,IEEE INC. NEW YORK, VOL. 39, NR. 3, PAGE(S) 1083-1085 XP000383047 ISSN: 0018-9448 das ganze Dokument

## Beschreibung

Die Erfindung betrifft ein Verfahren zur rahmenorientierten Übermittlung der Teilnehmerdaten mehrerer Teilnehmer.

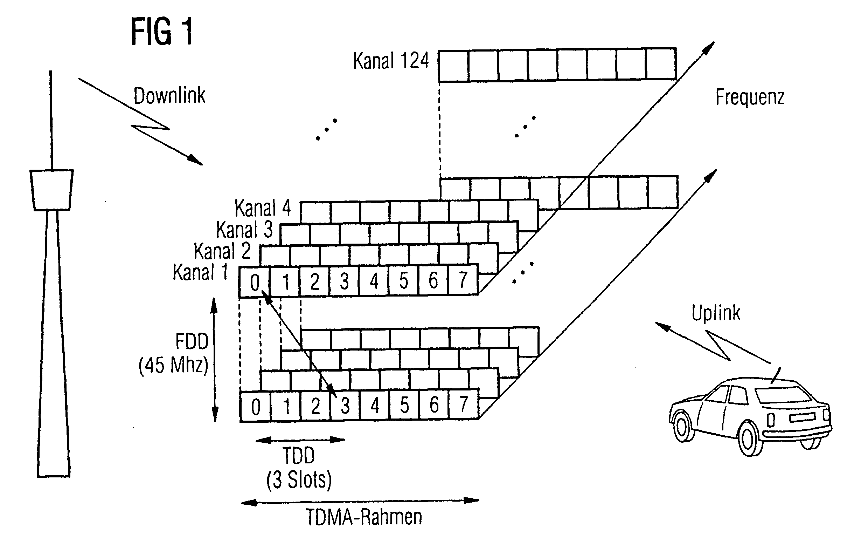

Die digitale schnurlose Übertragung von Daten für die Sprachkommunikation oder schnurlose Fax- oder Computeranwendungen hat im Rahmen der Installierung flächendeckender zellulärer digitaler Mobilfunknetze weite Verbreitung gefunden. Grundsätzlich sind dabei drei Verfahren zur Aufteilung der zur Verfügung stehenden Übertragungsbandbreite innerhalb einer Kommunikationszelle auf die einzelnen Teilnehmer bekannt. Beim TDMA (Time Division Multiple Access)-Verfahren werden die Daten verschiedener Teilnehmer in unterschiedlichen Zeitschlitzen im Zeitmultiplex übertragen. Beim FDMA (Frequency Division Multiple Access)-Verfahren werden Teilnehmer auf verschiedene Frequenzbänder aufgeteilt und beim CDMA (Code Division Multiple Access)-Verfahren werden die Daten unterschiedlicher Teilnehmer mit unterschiedlichen Codes codiert. In der Praxis werden häufig Kombinationen von zwei dieser Verfahren verwendet. Der Mobiltelefonstandard GSM (Global System for Mobile Communikations), der in vielen Ländern international benutzt wird, wendet z.B. eine Kombination aus TDMA und FDMA an. Im folgenden wird beispielhaft die GSM-Luftschnittstelle, d. h. das Übertragungsprotokoll für die Funk-Signalübertragung anhand der Figur 1 kurz erläutert. Die in Deutschland und in den meisten europäischen Ländern betriebenen GSM-Netze arbeiten in zwei Übertragungsbändern zwischen 890 und 915 MHz und 935 und 960 MHz. Es ist jedoch auch möglich, eine andere Frequenz zu wählen. Beispielsweise arbeitet das DCS-1800-System ebenfalls nach dem GSM-Standard in einem Frequenzbereich von 1800 MHz (E-Netze).

Im GSM-System stehen beispielsweise 124 Kanäle mit einem Kanalabstand von 200 kHz für die Aufwärtsverbindung (uplink) und ebenfalls 124 Kanäle mit einem Kanalabstand von 200 kHz für die Abwärtsverbindung (downlink) zur Verfügung (s. Fig. 1). Jeder dieser Frequenzkanäle ist wiederum in Zeitmultiplex-Rahmen oder TDMA-Frames einer Dauer von 4,615 ms aufgeteilt. Jeder Zeitmultiplex-Rahmen besteht wiederum aus acht Zeitschlitzen von 577 µs Dauer. Jeder Zeitschlitz enthält in der Mitte eine Trainingssequenz zur Synchronisierung, Präambel- bzw. Postambeldaten am Beginn und Ende des Zeitschlitzes sowie ein Schutzintervall (Guard Period) zwischen zwei benachbarten Zeitschlitzen (Bursts). Weitere sind beispielsweise in David, Benker, "Digitale Mobilfunksysteme", Stuttgart, 1994, S. 326 bis 362 beschrieben.

Für jeden Teilnehmer in einer Mobilfunkzelle wird jeweils ein Zeitschlitz in einem der 124 Kanäle für die Aufwärtsverbindung und ein Zeitschlitz für die Abwärtsverbindung benötigt. Ein Nachteil dieses Verfahrens liegt daher darin, daß jedem Teilnehmer eine feste Übertragungskapazität von einem Zeitschlitz je Übertragungsrahmen zugeordnet wird, die oft nicht ausgenutzt wird.

Aus US 5,193,091 ist ein TDMA-Telekommunikationssystem bekannt, bei dem Nachrichten zwischen pikozellularen mobilen, verteilten Pikozellen zugeordneten, Funksende-/Funkempfangseinrichtungen und mikrozellularen, einer die Pikozellen umfassenden Mikrozelle zugeordneten, mobilen Funksende-/Funkempfangseinrichtungen über Funkkanäle übertragen werden, die in Zeitschlitze unterteilt sind, wobei mindestens einer der Zeitschlitze wiederum in Sub-Zeitschlitze unterteilt ist, so dass mikrozellulare Funksende-/Funkempfangseinrichtungen Nachrichten innerhalb der Zeitschlitze und pikozellulare Funksende-/Funkempfangseinrichtungen Nachrichten in den Sub-Zeitschlitzen übertragen, wobei die einzelnen Sub-Zeitschlitze jeweils den einzelnen Pikozellen zugeordnet sind.

Der Erfindung liegt daher die Aufgabe zugrunde, ein Verfahren zur digitalen Funk-Übertragung von Daten zwischen einer Basisstation und einer Mehrzahl von Teilnehmern vorzuschlagen, wobei die Übertragungskapazität flexibel auf verschiedene Nutzer mit unterschiedlichen Datenraten, beispielsweise Sprachkommunikation oder Datenkommunikation, aufgeteilt werden kann.

Die Aufgabe wird gelöst durch das in Anspruch 1 definierte digitale Funkübertragungsverfahren. Vorteilhafte Weiterbildungen der Erfindung sind in den Unteransprüchen beschrieben.

Bei dem erfindungsgemäßen Verfahren werden die zwischen mehreren verschiedenen Teilnehmern und der Basisstation zu über tragenden Daten in Zeitschlitz-Rahmen übertragen, wobei die Position der Daten in einem Zeitschlitz den entsprechenden Teilnehmer bestimmt. Der Teilnehmer erkennt an der Position eines detektierten Datensymbols innerhalb eines von dem Empfänger empfangenen Zeitschlitzes, ob das Symbol zu der ihm zugeordneten Datenfolge gehört. Umgekehrt erkennt die Basisstation an der Position eines detektierten Datensymbols, von welchem Teilnehmer bzw. Mobilteil die Daten ausgesandt sind. Es handelt sich also um eine zweite Zeitmultiplex-Stufe innerhalb eines Zeitrahmens. Die Länge dieser Zeitmultiplex-Datenpakete ist aber im Gegensatz zu derjenigen der TDMA-Rahmen variabel.

Die Daten der verschiedenen Teilnehmer können symbolweise oder blockweise innerhalb eines Zeitrahmens verschachtelt übertragen werden. Bei der blockweisen Verschachtelung können Teilnehmer, die eine hohe Übertragungsgüte, beispielsweise für die Datenkommunikation, erfordern, in der Nähe einer Synchronisations-Trainingssequenz übertragen werden. Die sich zeitlich verändernden Mehrwegeausbreitungspfade werden mit Hilfe einer Trainings- oder Pilotsequenz geschätzt und lassen für die in unmittelbarer Nähe angeordneten Datensymbole eine sehr gute Vorhersage der durch den Kanal bedingten Verzerrungen zu. Damit ist für diese Datensymbole eine höhere Zuverlässigkeit der Detektion erreichbar als bei weiter entfernt angeordneten Datensymbolen.

Eine vorteilhafte Weiterbildung des erfindungsgemäßen Verfahrens ergibt sich bei Anwendung in CDMA-basierten Systemen mit variabler Spreizcodelänge. Dabei werden die zu übertragenden Datensymbole mittels eines Spreizcodes codiert übertragen. Durch eine Anpassung der Spreizcodelänge kann bei konstant vorgegebener Chiprate des Übertragungssystems (bei konstanter Übertragungsbandbreite) eine Anpassung an die vom Teilnehmer gewünschte Datensymbolrate erreicht werden.

Vorzugsweise werden beim CDMA-System zur gleichzeitigen Übertragung der Datensymbole mehrerer Teilnehmer mehrere orthogonale Spreizcodes variabler Länge verwendet. Orthogonale Spreizcodes können vom Empfänger leicht separiert werden. Es stehen dabei insgesamt n orthogonale Spreizcodes bei einer Länge von n Symbolen zur Verfügung, so daß die zur Verfügung stehende Bandbreite trotz Frequenzspreizung optimal ausgenutzt werden kann. Die Elemente des orthogonalen Spreizcodes können beispielsweise auf dem Einheitskreis in der komplexen Zahlenebene liegen.

Die Erfindung wird im folgenden anhand der zugehörigen Zeichnung erläutert, in der
Fig. 1 schematisch die bekannte GSM-Luftschnittstelle zeigt;
Fig. 2 schematisch einen TDMA-Zeitschlitz des erfindungsgemäßen Verfahrens zeigt;
Fig. 3 schematisch einen spreizcodierten CDMA/TDMA-Zeitschlitz des erfindungsgemäßen Verfahrens zeigt; und
Fig. 4 ein Blockdiagramm des Übertragungsweges zwischen Sender und Empfänger bei dem erfindungsgemäßen Funkübertragungsverfahren ist.

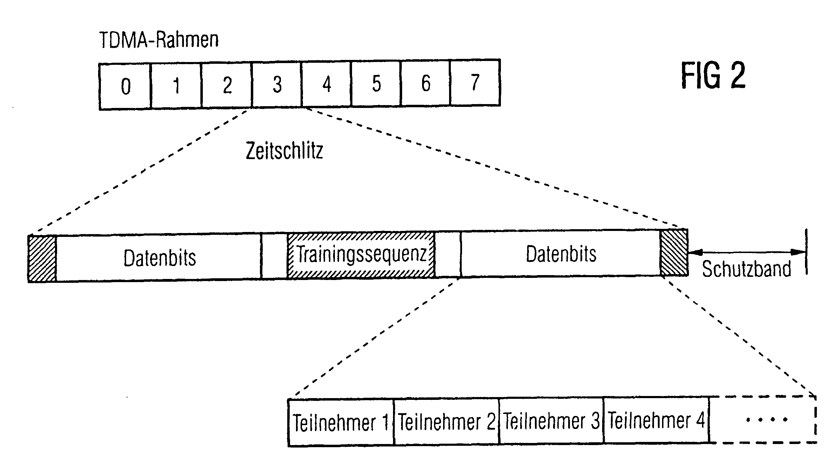

Fig. 2 zeigt beispielhaft einen Zeitmultiplex-TDMA-Rahmen mit acht Zeitschlitzen. Die Erfindung ist jedoch nicht auf eine bestimmte Anordnung der Zeitschlitze oder Zeitmultiplex-Rahmen beschränkt. Ein Zeitschlitz kann die folgenden Komponenten enthalten: Datenbits, Präambel, Mittambel, Postambel und ein Schutzband oder Schutzintervall (GP). Beim GSM-System ist eine Trainingssequenz als Mittambel vorgesehen. Die Trainingssequenz oder Pilotsequenz kann jedoch auch in einem anderen Bereich des Zeitschlitzes angeordnet sein. Bei dem erfindungsgemäßen digitalen Funkübertragungsverfahren weist ein Zeitschlitz mindestens einen Datenbereich auf. Dieser ist wiederum in Blöcke bestehend aus einer Anzahl N Übertragungsdatensymbolen verschiedener Teilnehmer aufgeteilt. In dem in Fig. 2 gezeigten Beispiel sind die Datensymbole oder Datenbits von vier Teilnehmern in einem Datenblock angeordnet.

Für die Anordnung der Datensymbole mehrerer Teilnehmer innerhalb eines Zeitschlitzes gibt es zwei verschiedene Möglichkeiten:
1. vollständiges Verschachteln:
   (Beispiel: drei Teilnehmer, Teilnehmer 1 und 2 mit Datenrate X und Teilnehmer 3 mit der doppelten Datenrate 2X)
   Teilnehmer 1 belegt die Übertragungsdatensymbole 1, 5, 9, 13 ... N-3.
   Teilnehmer 2 belegt die Übertragungsdatensymbole 3, 7, 11, 15 ... N-1.
   Teilnehmer 3 belegt die Übertragungsdatensymbole 2, 4, 6, 8, 10, 12, 14, 16, ... N-2, N.
2. Blockbildung:
   (Beispiel: drei Teilnehmer, Teilnehmer 1 und 2 mit Datenrate X und Teilnehmer 3 mit Datenrate 2X)
   Teilnehmer 1 belegt die Übertragungsdatensymbole 1, 2, 3, ... N/4.
   Teilnehmer 2 belegt die Übertragungsdatensymbole N/4+1,
   N/4+2, ... N/2.
   Teilnehmer 3 belegt die Übertragungsdatensymbole N/2+1,
   N/2+2, ... N.

Aus den Beispielen wird deutlich, daß die Datenkapazität durch die gleichzeitige Nutzung eines Datenblockes in einem Zeitschlitz durch mehrere Teilnehmer optimal ausgenutzt werden kann. Gleichzeitig kann die zur Verfügung stehende Übertragungskapazität flexibel zugewiesen werden. In den obigen Beispielen wird dem Teilnehmer 3 die doppelte Datenrate zugewiesen wie den Teilnehmern 1 und 2.

Die Position der einzelnen Datensymbole oder Datenblöcke innerhalb des Zeitschlitzes gibt den jeweiligen Teilnehmer an. Diese Information kann in einem Steuersignalfeld in einem Präambelbereich, Postambelbereich oder dgl. des Zeitschlitzes untergebracht werden. Bei der beschriebenen blockweisen Anordnung der Datensymbole verschiedener Teilnehmer können die Daten von Teilnehmern, die eine besonders hohe Übertragungsgüte erfordern, in der Nähe der Trainingssequenz angeordnet sein (beispielsweise Teilnehmer 1 in dem Beispiel von Fig. 2). Die sich zeitlich verändernden Mehrwegeausbreitungspfade werden mit Hilfe einer Trainings- oder Pilotsequenz geschätzt und lassen für die in unmittelbarer Nähe angeordneten Datensymbole eine sehr gute Vorhersage der durch den Kanal bedingten Verzerrungen zu. Damit ist für diese Datensymbole eine höhere Zuverlässigkeit der Detektion erreichbar, als bei weiter entfernt angeordneten Datensymbolen. Dieser Effekt ist zunächst unabhängig vom gewählten Detektor, solange er die Schätzung der Kanaleigenschaften einbezieht.

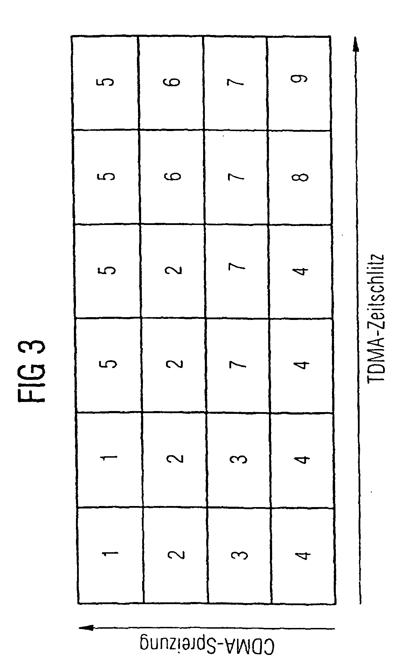

Im folgenden wird die Anwendung der Erfindung auf CDMA-basierte Systeme mit Spreizcodierung variabler Spreizcodelänge anhand von Beispielen und unter Bezugnahme auf Fig. 3 näher erläutert. Um das erfindungsgemäße Übertragungsverfahren, bei dem die Datensymbole mehrerer Teilnehmer in einem Zeitschlitz übertragen werden, auch dann vorteilhaft nutzen zu können, wenn die aktuell benötigte Datenrate unterhalb der maximalen Übertragungskapazität liegt, kann eine Spreizung der Datensymbole mittels eines Spreizcodes einer festgelegten Länge von n Symbolen vorgenommen werden. In einem TDMA-Zeitschlitz wird daher zusätzlich zu den Zeitmultiplex-Blöcken oder Chips noch eine CDMA-Aufteilung vorgenommen. In dem in Fig. 3 gezeigten Beispiel werden so die Daten von neun verschiedenen Teilnehmern in 24 Blöcken (sechs Zeitmultiplex-Blöcke x vier verschiedene Spreizcodes) in einem TDMA-Zeitschlitz übertragen, wobei den jeweiligen Teilnehmern zwischen einem (Teilnehmer 8 und 9) und 4 Blöcken (Teilnehmer 7) zugewiesen sind. Die Funkübertragung ist weniger empfindlich gegenüber schmalbandigen Störungen innerhalb des Übertragungsfrequenzbandes. Die Übertragung wird lediglich beeinträchtigt, ein Totalausfall tritt jedoch nicht auf. Durch eine Anpassung der Spreizcodelänge kann bei konstant vorgegebener Chiprate des Übertragungssystems (bei konstanter Übertragungsbandbreite) eine Anpassung an die vom Teilnehmer gewünschte Datensymbolrate erreicht werden. Bei hoher Nutzerdatenrate wird die Spreizcodelänge reduziert und somit ein Datensymbol des Nutzers mit einer geringeren Anzahl von Chips übertragen. Um die gleiche Energie pro Nutzbit zu erreichen, ist die Sendeleistung um den entsprechenden Faktor zu erhöhen. Bei geringer Nutzdatenrate des Teilnehmers wird die Spreizcodelänge vergrößert und die Leistung reduziert.

Werden mehrere orthogonale Spreizcodes benutzt, die vom Empfänger leicht separiert werden können, wird die zur Verfügung stehende Übertragungsbandbreite bestmöglich ausgenutzt, da bei einer Spreizcodelänge von n Codesymbolen insgesamt n orthogonale Spreizcodes zur Verfügung stehen, mit denen die Datensymbole verschiedener Teilnehmer parallel übertragen werden können. Die Zuordnung der Datensymbole zu den jeweiligen Teilnehmern erfolgt dabei sowohl durch die Position der Symbole bzw. Symbolblöcke innerhalb eines Zeitschlitzes als auch durch den jeweils gewählten Spreizcode. Dabei können mehrere Teilnehmer-Datenströme gleichzeitig parallel mit unterschiedlich langen, aber zueinander orthogonalen Spreizcodes übermittelt werden.

Bei einem TDMA-System kann durch die Einführung der variablen Spreizung ein gepulster Betrieb bei sehr niedriger Nutzerdatenrate vermieden werden. Jedes Nutzerbit verteilt sich durch die Spreizung auf mehrere "Chips" und ermöglicht das unterbrechungsfreie Aussenden der Chip-Symbole mit der vorgegebenen Taktrate des Ubertragungskanals. Die Sendeleistung kann auch hier um den Spreizfaktor reduziert werden.

Im folgenden sind drei Beispiele des erfindungsgemäßen Verfahrcns mit Sprcizcodicrung erläutert. Der Spreizcode oder CDMA-Code besteht in den Beispielen aus vier Symbolen (1, j, -1, -j im ersten und zweiten Beispiel, wobei j=√-1 ist). Jedes Teilnehmer-Datensymbol (Bit) wird durch die Codespreizung, also Multiplikation mit den Spreizcodesymbolen, auf ein sogenanntes "Chip", bestehend aus vier Symbolen, aufgeweitet.

| Beispiel (1): Q=4, 1 User | | | | | | | |
|---|---|---|---|---|---|---|---|
| Chip Nr. | 1\|2\|3\|4\| | 5\|6\|7\|8\| | 9\|10\|11\|12\| | 13\|14\|15\|16\| | 17\|18\|19\|20\| | 21\|22\|23\|24\| | |
| CDMA-Code | 1 j -1 -j | 1 j -1 -j | 1 j -1 -j | 1 j -1 -j | 1 j -1 -j | 1 j -i -j | *** |
| User Data | 1.bit | 2.bit | 3.bit | 4.bit | 5.bit | 6.bit | *** |

| Beispiel (2) : Q=4, Anzahl User = 2 | | | | | | | |
|---|---|---|---|---|---|---|---|
| Chip Nr. | 1\|2\|3\|4 | 5\|6\|7\|8\| | 9\|10\|11\|12\| | 13\|14\|15\|16\| | 17\|18\|19\|20\| | 21\|22\|23\|24\| | |
| CDMA-Code | 1 j -1 -j | 1 j -1 -j | 1 j -1 -j | 1 j -1 -j | 1 j -1 -j | 1 j -1 -j | *** |
| User Data | 1:1 | 2:1 | 1:2 | 2:2 | 1:3 | 2.3 | *** |

| Beispiel(3): Q=4, Anzahl User =6, Anzahl CDMA-Codes =3 | | | | | | | |
|---|---|---|---|---|---|---|---|
| Chip Nr. | 1\|2\|3\|4\| | 5\|6\|7\|8\| | 9\|10\|11\|12\| | 13\|14\|15\|16\| | 17\|18\|19\|20\| | 21\|22\|23\|24\| | |
| CDMA-Code | 1 j -1 -j | 1 j -1 -j | 1 j -1 -j | 1 j -1 -j | 1 j -1 -j | 1 j -1 -j | *** |
| User Data | 1:1 | 4:1 | 1:2 | 4:2 | 1:3 | 4.3 | *** |
| CDMA-Code2 | 1 j 1 j | 1 j 1 j | 1 j 1 j | 1 j 1 j | 1 j 1 j | 1 j 1 j | |
| Data Symbols | 2:1 | 5:1 | 2:2 | 5:2 | 2:3 | 5:3 | |
| CDMA-Code3 | 1 -j -1 j | 1 -j -1 j | 1 -j -1 j | 1 -j -1 j | 1 -j -1 j | 1 -j -1 j | |
| Data Symbols | 3:1 | 6:1 | 3:2 | 6:2 | 3:3 | 6:3 | |

Im ersten Beispiel werden die Datensymbole (1. Bit, 2. Bit, ...) lediglich eines Teilnehmers in dem Datenabschnitt des Zeitschlitzes übertragen. Die Bits werden aufeinanderfolgend mit dem Spreizcode (1, j, -1, -j) multipliziert und so auf vier Symbole aufgeweitet, die jeweils einen Chip bilden, der dann übertragen wird.

Im zweiten Beispiel sind zwei Teilnehmer vorhanden. Die Datensymbole werden jeweils mit dem gleichen Spreizcode multipliziert und abwechselnd an aufeinanderfolgenden Positionen innerhalb eines Zeitschlitzes als aufgeweitete Chips übertragen.

Im dritten Beispiel sind insgesamt sechs Teilnehmer vorhanden. Um eine genügende Übertragungskapazität bereitzustellen, werden insgesamt drei orthogonale Spreizcodes oder CDMA-Codes verwendet. Zwei Codes sind orthogonal, wenn ihr Produkt null ergibt. Dadurch sind die mit orthogonalen Codes erzeugten Chips verschiedener Teilnehmer leicht separierbar. Für die Teilnehmer 1 und 4 wird in Beispiel 3 der Spreizcode (1, j, -1, -j) benutzt, für die Teilnehmer 2 und 5 der Code (1, j, 1, j) und für die Teilnehmer 3 und 6 der Code (1, -j, -1, j). So können in dem Zeitschlitz die Daten der sechs Teilnehmer gespreizt und zeitgemultiplext übertragen werden. Es sei angemerkt, daß bei einem Code der Länge n=4 Symbole vier orthogonale Codes existieren, so daß in einem Zeitschlitz-Rahmen bei vierfacher Bandbreite die vierfache Datenmenge verglichen mit der ungespreizten Datenübertragung transportiert werden kann.

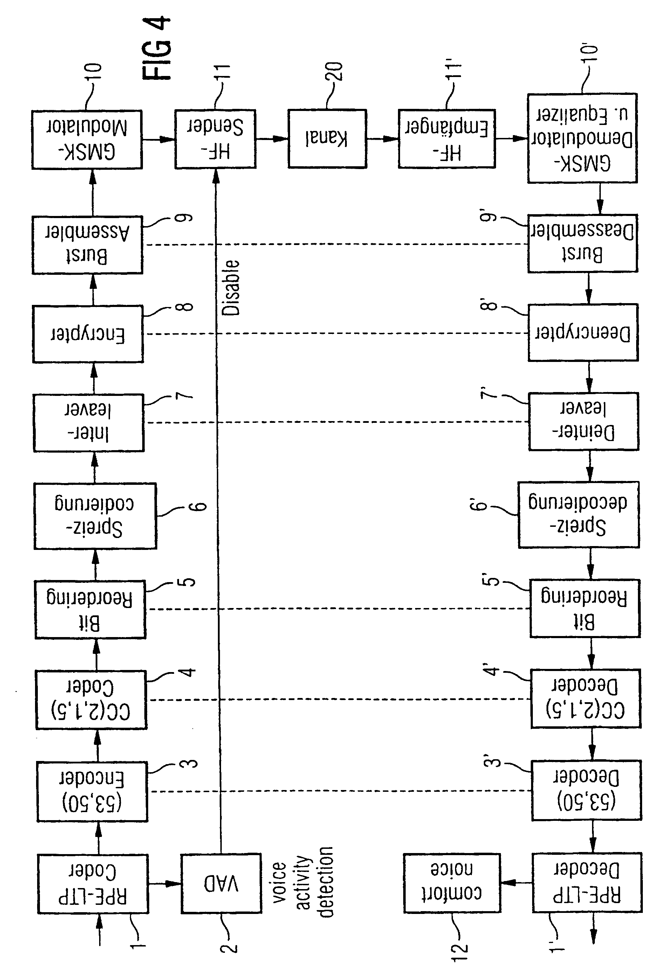

Fig. 4 zeigt ein schematisches Blockbild des Übertragungsweges eines digitalen Funkübertragungsverfahrens am Beispiel der Sprachkommunikation. Ein Sprachaktivitätsdetektor 1 erfaßt, ob der Teilnehmer spricht, und aktiviert oder deaktiviert entsprechend den Hochfrequenzsender 11. Das Sprachsignal wird durch die Codierer 1, 3, 4 codiert und die Bits in der Einrichtung 5 angeordnet. In dem Spreizcodierer 6 werden die Daten spreizcodiert, mittels der Verschachtelungseinrichtung 7 verschachtelt und der Verschlüsselungseinrichtung 8 verschlüsselt. In der Zeitschlitz-Zusammenfügungseinrichtung (Burst Assembler) 9 werden die codierten, verschachtelten und verschlüsselten Datensymbole innerhalb des Datenbereiches des Zeitschlitzes eingeordnet. Zusätzlich wird die Positionsinformation einem Abschnitt des Zeitschlitzes hinzugefügt. Die Daten werden durch den GMSK-Modulator moduliert und von dem HF-Sender 11 über einen Kanal 20 zu dem HF-Empfänger 11 übertragen, von dem GMSK-Demodulator und Equalizer 10' demoduliert. Die Zeitschlitze oder Bursts werden durch die Burst-Zerlegungseinrichtung 9' zerlegt, die so gewonnenen Daten durch die Entschlüsselungseinrichtung 8' entschlüsselt und durch die Entschachtelungseinrichtung 7' entschachtelt. Mit Hilfe eines inversen Spreizcodes werden die Daten durch die Spreizdecodierschaltung 6' decodiert, die Bits angeordnet und die Daten durch die Decoder 1'; 3' und 4' decodiert. Für Sprachkommunikation kann eine Rauschunterdrückungseinrichtung 12 vorgesehen sein.

Die Erfindung schlägt ein digitales Funkübertragungsverfahren vor, bei dem innerhalb eines Zeitschlitzes eines Zeitmultiplex-Rahmens die Datensymbole mehrerer verschiedener Teilnehmer übertragen werden, wobei die Position der Daten den entsprechenden Teilnehmer bestimmt. Dies ermöglicht eine flexible Zuweisung von Übertragungskapazität an die Teilnehmer.
Bei einer Weiterbildung des erfindungsgemäßen Verfahrens werden die Datensymbole der verschiedenen Teilnehmer mittels eines Spreizcodes variabler Länge codiert und so in einem CDMA-basierten System mit vorgegebener Übertagungsbandbreite übertragen. Dies erlaubt eine optimale Ausnutzung der vorhandenen Übertragungskapazität.

## Patentansprüche

1. Verfahren zur digitalen Funk-Übertragung von Daten zwischen einer Basisstation und einer Mehrzahl von Teilnehmern in Zeitschlitz-Rahmen, wobei in einem Zeitschlitz die Daten mehrerer verschiedener Teilnehmer übertragen werden und die Position der Daten in einem Zeitschlitz den entsprechenden Teilnehmer bestimmt, die zu übertragenden Datensymbole verschiedener Teilnehmer blockweise verschachtelt innerhalb eines Zeitschlitzes übertragen werden und die Datensymbolblöcke von Teilnehmern, die eine höhere Übertragungsgüte erfordern, in der Nähe einer Synchronisations-Trainingssequenz übertragen werden.

2. Verfahren nach Anspruch 1,
**dadurch gekennzeichnet,**
**daß** die zu übertragenden Datensymbole verschiedener Teilnehmer symbolweise verschachtelt innerhalb eines Zeitschlitzes übertragen werden.

3. Verfahren nach einem der Ansprüche 1 bis 2,
**dadurch gekennzeichnet,**
**daß** die zu übertragenden Datensymbole verschiedener Teilnehmer mittels eines Spreizcodes codiert übertragen werden.

4. Verfahren nach Anspruch 3,
**dadurch gekennzeichnet,**
**daß** zur gleichzeitigen Übertragung der Datensymbole mehrerer Teilnehmer mehrere orthogonale Spreizcodes mit variabler Länge verwendet werden.

5. Verfahren nach Anspruch 14,
**dadurch gekennzeichnet,**
**daß** die Elemente des orthogonalen Spreizcodes auf dem Einheitskreis in der komplexen Zahlenebene liegen.

## Claims

1. Method for the digital radio transmission of data between a base station and a plurality of subscribers in time slot frames, the data of a plurality of different subscribers being transmitted in a time slot and the position of the data in a time slot determining the corresponding subscriber, the data symbols to be transmitted of different subscribers being transmitted blockwise interleaved within a time slot, and the data symbol blocks of subscribers requiring a higher transmission quality being transmitted in proximity to a synchronization training sequence.

2. Method according to Claim 1,
**characterized in that** the data symbols to be transmitted of different subscribers are transmitted symbol-wise interleaved within a time slot.

3. Method according to Claims 1 and 2,
**characterized in that** the data symbols to be transmitted of different subscribers are transmitted encoded by means of a spreading code.

4. Method according to Claim 3,
**characterized in that** for the simultaneous transmission of the data symbols of a plurality of subscribers, a plurality of variable-length orthogonal spreading codes are used.

5. Method according to Claim 4,
**characterized in that**
the elements of the orthogonal spreading code lie on the unity circle in the complex number plan.

## Revendications

1. Procédé pour la transmission radio numérique de données entre un poste de base et une pluralité d'abonnés dans des trames de créneaux temporels, les données de plusieurs abonnés différents étant transmises dans un créneau temporel et la position des données dans un créneau temporel déterminant l'abonné correspondant, les symboles de données de différents abonnés devant être transmis étant transmis à l'intérieur d'un créneau temporel, sous la forme entrelacée par blocs et les blocs de symboles de données des abonnés nécessitant une plus haute qualité de transmission étant transmis à proximité d'une séquence d'entraînement de synchronisation.

2. Procédé selon la revendication 1,
**caractérisé en ce que**
les symboles de données de différents abonnés devant être transmis sont transmis à l'intérieur d'un créneau temporel, sous la forme entrelacée par symboles.

3. Procédé selon l'une quelconque des revendications 1 à 2,
**caractérisé en ce que**
les symboles de données de différents abonnés devant être transmis sont transmis sous la forme codée, à l'aide d'un code d'étalement.

4. Procédé selon la revendication 3,
**caractérisé en ce que**
pour la transmission simultanée des symboles de données de plusieurs abonnés, plusieurs codes d'étalement orthogonaux à longueur variable sont utilisés.

5. Procédé selon la revendication 4,
**caractérisé en ce que**
les éléments du code d'étalement orthogonal sur le cercle unité, se situent dans le plan numérique complexe,.
